# EUROPEAN PATENT SPECIFICATION

(11) **EP 3 548 439 B1**
(45) Date of publication and mention of the grant of the patent: **14.08.2024**
(21) Application number: 17804587.8
(22) Date of filing: 30.11.2017
(51) Int. Cl.: C02F 1/461, C02F 3/00, C02F 3/30, C02F 1/467, C02F 9/00, C02F 1/04, C02F 1/28, C02F 1/44, C02F 103/20

(54) **METHOD FOR THE NITRIFICATION OF HIGH-STRENGTH AQUEOUS AMMONIA SOLUTIONS**
VERFAHREN ZUR NITRIFIZIERUNG VON HOCHKONZENTRIERTEM AMMONIAKABWASSER
PROCÉDÉ DE NITRIFICATION DES EAUX USÉES AVEC AMMONIAC À HAUTE CONCENTRATION

(30) Priority: 30.11.2016 EP 16201432
(43) Date of publication of application: 09.10.2019
(73) Proprietor: EAWAG, Eidgenössische Anstalt Für Wasserversorgung, Abwasserreinigun Und Gewässerschutz, 8600 Dübendorf (CH)
(72) Inventor: UDERT, Kai, Markus, CH-8004 Zürich (CH); ZÖLLIG, Hanspeter, CH-8046 Zürich (CH)
(74) Representative: Schmauder & Partner AG Patent- & Markenanwälte VSP
(86) International application number: PCT/EP2017/080994
(87) International publication number: WO 2018/100069

(56) References cited:
- WO-A1-2015/150610
- US-A- 5 382 331
- US-A1- 2010 304 226
- US-A1- 2012 132 521
- US-A1- 2013 112 601
- UDERT K M ET AL: "Complete nutrient recovery from source-separated urine by nitrification and distillation", WATER RESEARCH, ELSEVIER, AMSTERDAM, NL, vol. 46, no. 2, 5 November 2011 (2011-11-05), pages 453 - 464, XP028349233, ISSN: 0043-1354, [retrieved on 20111117], DOI: 10.1016/J.WATRES.2011.11.020
- NEDA FARAGHI ET AL: "Nitrite as a candidate substrate in microbial fuel cells", BIOTECHNOLOGY LETTERS, SPRINGER NETHERLANDS, DORDRECHT, vol. 34, no. 8, 1 May 2012 (2012-05-01), pages 1483 - 1486, XP035089772, ISSN: 1573-6776, DOI: 10.1007/S10529-012-0939-Y
- JINGJING YANG ET AL: "Oxidation-reduction potential (ORP) as a control parameter in a single-stage partial nitritation/anammox process treating reject water : ORP control on partial nitrification/anammox process", JOURNAL OF CHEMICAL TECHNOLOGY AND BIOTECHNOLOGY, vol. 91, no. 10, 29 December 2015 (2015-12-29), pages 2582 - 2589, XP055447133, ISSN: 0268-2575, DOI: 10.1002/jctb.4849
- MARTIN G. LIEBENSTEINER ET AL: "Microbial redox processes in deep subsurface environments and the potential application of (per)chlorate in oil reservoirs", FRONTIERS IN MICROBIOLOGY, vol. 5, 1 September 2014 (2014-09-01), XP055447136, DOI: 10.3389/fmicb.2014.00428

## Description

### Field of the Invention

The present invention generally relates to a method for the biological nitrification of high-strength aqueous ammonia solutions such as urine, manure, digester supernatant or landfill leachate. More particularly, it relates to a self-adjusting electrochemically assisted operating principle for the above.

### Background of the Invention

Source separation of urine is a promising approach to recycle nutrients from wastewater because most of the macro nutrients excreted by humans (nitrogen, phosphorus, potassium) are contained in urine (Larsen et al., 2009). It has been shown that evaporation of water is the most promising process to recover all these nutrients from urine in a concentrated solution (Udert and Wächter, Water Research 46 (2012) 453-464). However, before the water can be evaporated the urine needs to be stabilized to prevent ammonia volatilization which is achieved by lowering the pH value for example by adding an acid (Ek et al., Water Science and Technology 54 (2006) 437-444) or by nitrification (Udert and Wächter, 2012, loc. cit.).

Adding an acid is inefficient because urine after spontaneous urea hydrolysis is well buffered, and it poses security risks due to the necessary handling of strong acids.

Nitrification is a more suitable method. It is a biological process involving two bacterial groups: ammonia oxidizing bacteria (AOB) and nitrite oxidizing bacteria (NOB). AOB oxidize ammonia to nitrite and NOB oxidize nitrite to nitrate. However, the NOB are inhibited by nitrite already at low concentrations, which can easily lead to nitrite accumulation and the failure of the process (Fumasoli et al., 2016; Udert and Wächter, 2012, loc. cit.). The NOB inhibition can appear when AOB activity, and therewith nitrite production, increases due to a change in operating conditions such as a change in pH, temperature, or the influent load.

As an alternative to a fully biological nitrification relying on a delicate and challenging interplay of AOB and NOB, Udert and Wächter, 2012, loc. cit., have considered carrying out the AOB and NOB processes in two separate reactors. This separation allows having high nitrite concentrations in the first reactor without running into problems caused by inhibition of NOB at high nitrite concentrations. For this purpose they have considered two possible implementations. The first possibility involves biological ammonium oxidation followed by purely chemical nitrite oxidation. The second, distinct possibility involves biological ammonium oxidation followed by purely electrochemical nitrite oxidation. However, in view of various potential difficulties, these authors decided to pursue a different approach.

Faraghi and Ebrahimi, Biotechnol. Lett. 34 (2012) 1483-1486, also discuss the fully biological nitrification relying with AOB and NOB as well as an alternative approach using a reactor for biological ammonium oxidation with high nitrite concentration in the effluent followed by a chemical or photochemical nitrite oxidation step. As a further possibility, these authors adopted a scheme relying on biological ammonium oxidation followed by a purely electrochemical step based on a microbial fuel cell process in an anaerobic anode environment.

US 2013/112601 A1 generally discloses bio-electrochemical systems suitable for denitrification and pH control.

Methods for measuring and also controlling the nitrite concentration in aqueous samples are known in principle. For example, US5382331 A addresses the problem of inline detection and control of nitrite in the context of corrosion control in steel water pipes, which relies on adding nitrite as an inhibitor. The measurement principle used is the correlation of the current to the nitrite concentration in a chronoamperometric measurement. In contrast, GB2174207 A deals with the continuous determination of nitrite and nitrate in aqueous media. It is based on the potentiostatic oxidation of nitrite to nitrate on a platinum or glassy carbon electrode and the determination of nitrite from the resulting current. Removal of nitrite is not addressed.

EP2619142 A1 addresses the removal of nitrate and ammonia from wastewater. The invention is a combined removal of ammonia and nitrate in an undivided flow-through electrolyzer. Nitrate is reduced to ammonia on a copper/nickel alloy and ammonia is oxidized to N₂ on a dimensionally stable anode. Nitrite is mentioned as a by-product of nitrate reduction, which is oxidized to nitrate at the anode. The control of nitrite is not the focus of the process and no coupling to a biological process is foreseen.

In view of all the above there is a need for an improved nitrification process that overcomes or at least reduces the above mentioned disadvantages, particularly the problems caused by the inhibition of NOB caused by nitrite produced in the first reaction step.

### Summary of the Invention

The above and other tasks are solved by the present invention.

According to the invention (claim 1), there is provided a method of biological nitrification of an ammonia containing aqueous medium, wherein in a first oxidation step ammonia is oxidized to nitrite by ammonia oxidizing bacteria (AOB) and wherein in a second oxidation step nitrite is oxidized to nitrate by nitrite oxidizing bacteria (NOB), characterized in that a supplementary process of nitrite removal is applied which has a nitrite removal rate that is dependent on the instant nitrite concentration in the aqueous medium.

According to the invention, the supplementary process comprises exposing the aqueous medium to a potentiostatically operated electrolysis cell comprising an anode, a cathode and a reference electrode, wherein the anode potential is maintained at a fixed value against the reference electrode (e.g. a silver / silver chloride electrode, a (Ag/AgCI), mercury / mercury sulfate electrode (MSE), or a saturated calomel electrode (SCE)), the fixed potential value being 0.4 V to 2.0 V versus a standard hydrogen electrode reference (SHE). This is the minimum potential required for oxidation of nitrite. At the same time, the upper potential should be kept low enough to avoid oxidation of chloride. The value of the upper potential limit depends on the type of electrode, but should generally not exceed 2.0 V. By maintaining the potential of the anode in the range of 0.4 to 2.0 V, particularly 0.9 to 1.5 V, preferably about 1.2 V versus SHE or lower, very few competing reactions take place in nitrified urine and similar ammonia containing aqueous media, which results in just a small background current in case no nitrite is present. Nitrite, however, starts to be oxidized on graphite anodes at about 0.9 V versus SHE. Thus, the presence of nitrite leads to a very selective oxidation to nitrate at an anode potential of about 1.2 V versus SHE.

The present invention solves the problem of accumulating nitrite and the resulting process instability during nitrification by assisting the biological nitrite oxidation by NOB by providing a supplementary process of nitrite removal. The term "dependent on the instant nitrite concentration in the aqueous medium" shall be interpreted broadly. In general the rate of nitrite removal will depend on the type of supplementary process and could be almost constant over a certain concentration range or it could be essentially linearly dependent on nitrite concentration or it could have a more complex concentration dependence. In a preferred embodiment, the rate of nitrite removal is a monotonically increasing function of nitrite concentration, i.e. a function that is either increasing or constant. A key advantage of having a regulated supplementary process of nitrite removal is that the rate of nitrite removal is increased when it is particularly needed in order to keep the nitrite concentration low enough, or to lower the nitrite concentration to such acceptable levels, so as to allow sufficient NOB activity to keep oxidizing the nitrite produced by AOB.

In the present context, "instant concentration" of nitrite shall be understood as the concentration of nitrite at a particular time. In practice, the underlying concentration measurement will be obtained over a certain measurement time and may be taken at one or possibly at multiple locations in the aqueous medium. The skilled person will know that depending on the specific situation it may be necessary to take appropriate averages of measurement data in such manner that the principal task is achieved, namely the avoidance of an excessive nitrite concentration in the region where nitrification is being carried out.

Advantageous embodiments are defined in the dependent claims and described further below.

The process is applicable to a range of ammonia containing aqueous media such as manure, digester supernatant or landfill leachate. According to an advantageous embodiment, the aqueous medium is urine, particularly source-separated urine (claim 2).

Various additional methods for carrying out the supplementary process of nitrite removal can be envisioned. For example, it is possible to monitor the instant nitrite concentration photometrically or with a selective nitrite sensor and to use some kind of feedback mechanism to steer a process that reduces nitrite concentration. In principle, the latter process could involve the addition of a suitable reactant. For example, one could pass the aqueous medium through an auxiliary reactor kept under oxygen-free conditions and add suitable organic species to promote denitrification. Alternatively, if the overall method is carried out in a flow-through mode, the controlled nitrite removal is advantageously achieved by reducing the rate of influent medium.

The term "exposing the aqueous medium to a potentiostatically operated electrolysis cell" shall be understood in a broad sense. It shall comprise, as one example, the case that the aqueous medium is in contact with the cathode and anode of the electrolysis cell simply immersed in a reaction vessel containing the aqueous medium. But it shall also comprise, as another example, the case where the electrolysis cell is arranged separate from the reaction vessel and the aqueous medium is forced to flow through the electrolysis cell and back into the reaction vessel.

In the context of biological nitrification, the embodiment with potentiostatically operated electrolysis cell is very beneficial for two reasons. If nitrite accumulates due to high AOB activity, the electrolysis cell automatically starts to degrade nitrite. There is no need for nitrite detection or monitoring because the electrolysis cell switches on automatically and no chemicals need to be added. It is further beneficial that only small currents are flowing if no nitrite is present. This reduces the energy demand during stable operation of biological urine nitrification. When the electrochemical cell is operated in potentiostatic mode, the current and therewith the nitrite oxidation rate increases with the nitrite concentration. This effect balances out the behavior of biological nitrite oxidation: at the critical concentrations, when this process will be applied, the rate of biological nitrite oxidation decreases when nitrite accumulates. In other words, the use of electrochemical nitrite oxidation turns nitrification from a positive feedback process to a negative feedback process, which stabilizes itself.

It will be understood that the anode and cathode can be selected from a variety of types and designs. Advantageously, both the anode and the cathode are configured as graphite electrodes (claim 3).

While the above described process will generally work with an anode potential maintained in the range of 0.4 to 2.0 V versus a standard hydrogen electrode reference (SHE), it is preferable for the reasons mentioned above to use a value in the range of 0.9 to 1.5 V, particularly 1.1 to 1.3 V, and more particularly 1.1 to 1.3 V, i.e. about 1.2 V (claim 4).

According to an advantageous embodiment, the electrical current flowing through the anode or the applied voltage is used to quantify the concentration of nitrite present in the electrolysis cell (claim 5). In this manner the process detects and quantifies nitrite while removing nitrite at the same time.

It has generally been found to be advantageous if the pH value of the aqueous medium in the reactor is maintained in the range of 5.4 to 8.0 (claim 6).

According to a further embodiment (claim 7), the nitrification method further comprises a step of removing micro-pollutants contained in the wastewater. This may be done, for example, by means of an appropriately configured activated carbon filter system.

Advantageously (claim 8), the nitrification method is carried out as a continuous flow process wherein ammonia containing aqueous medium with an initial ammonia concentration flows into a reaction zone where it is subjected to said first and second oxidation steps and subsequently flows out of the reaction zone having a comparatively lower ammonia concentration. In this process there is also a decomposition of a substantial fraction of the organic compounds initially present in the aqueous medium, which is particularly favorable when using an activated carbon filter system.

In one embodiment (claim 9), the pH-value of the aqueous medium is maintained by controlling the inflow rate of the ammonia containing aqueous medium.

According to yet another embodiment (claim 10), the above defined method of biological nitrification further comprises a subsequent step of water removal. This is particularly useful as implementation of a method for recycling nutrients from wastewater rich in nitrogen and other nutrients. One example is urine. According to one embodiment (claim 11), the water removal is effected by evaporation. Alternatively or additionally, water removal may be effected by reverse osmosis or any other suitable physical process.

An apparatus (not part of the invention) for carrying out the method of the invention comprises a reaction vessel operable as a continuous flow stirred tank reactor connected to a flow-through parallel plate electrolysis cell equipped with an anode, a cathode and a reference electrode, the apparatus comprising pumping means for recirculating aqueous medium contained in the reaction vessel through the electrolysis cell and potentiostatic regulating means for maintaining the anode potential at a fixed value against the reference electrode, the reaction vessel being loaded with an aqueous medium supplemented with AOB and NOB, and that the potentiostatic regulating means being configured to maintain the fixed potential value to at least 0.4 V versus SHE. As will be understood, the aqueous medium will contain at least some small amounts of ammonia.

Potentiostatic arrangements including the electronic control circuitry that is needed to ensure stable operation thereof are basically known to the skilled person. In the simplest three-electrode configuration, they comprise a working electrode, a counter electrode and a reference electrode. The system functions by maintaining the potential of the working electrode at a constant level with respect to the reference electrode, which is achieved by adjusting the current at the counter electrode. As will be understood, if such an arrangement is used for oxidizing nitrite, the anode acts as the working electrode whereas the cathode acts as the counter electrode. It will also be understood that the reference electrode used in such an arrangement need not be a standard hydrogen electrode (SHE). The reference to a potential defined versus the SHE, which is a convenient definition, implies that if using another type of reference electrode it will be necessary to duly take into account the potential of the reference electrode versus the SHE.

According to one variant of the apparatus, the potentiostatic regulating means are configured to maintain the fixed potential value in the range of 0.4 to 2.0 V, particularly 0.9 to 1.5 V, more particularly 1.1 to 1.3 V versus SHE.

According to an advantageous variant of the apparatus, the reference electrode is a silver/silver chloride (Ag/AgCI) electrode, a mercury/mercurous sulfate (MSE) electrode or a saturated calomel (SCE) electrode.

According to a further variant, the apparatus further comprises means for removing micro-pollutants from the aqueous medium. Such removal may be achieved, e.g. by ozonation or by adsorption using appropriate adsorption means. In particular, the adsorption means can comprise an activated carbon filter system.

### Brief description of the drawings

The above mentioned and other features and objects of this invention and the manner of achieving them will become more apparent and the invention itself will be better understood by reference to the following description of embodiments of this invention taken in conjunction with the accompanying drawings, wherein are shown:
- Fig. 1: a schematic representation of an apparatus for carrying out biological nitrification of an ammonia containing aqueous medium;
- Fig. 2: a comparison of total, biological, and electrochemical nitrite oxidation rates resulting from a series of batch experiments; and
- Fig. 3: a) concentrations of ammonia, nitrite, and nitrate as a function of time before and after a sudden load increase by 40%. b) current density, O₂ concentration and pH value during the same experiment.

### Detailed description of the invention

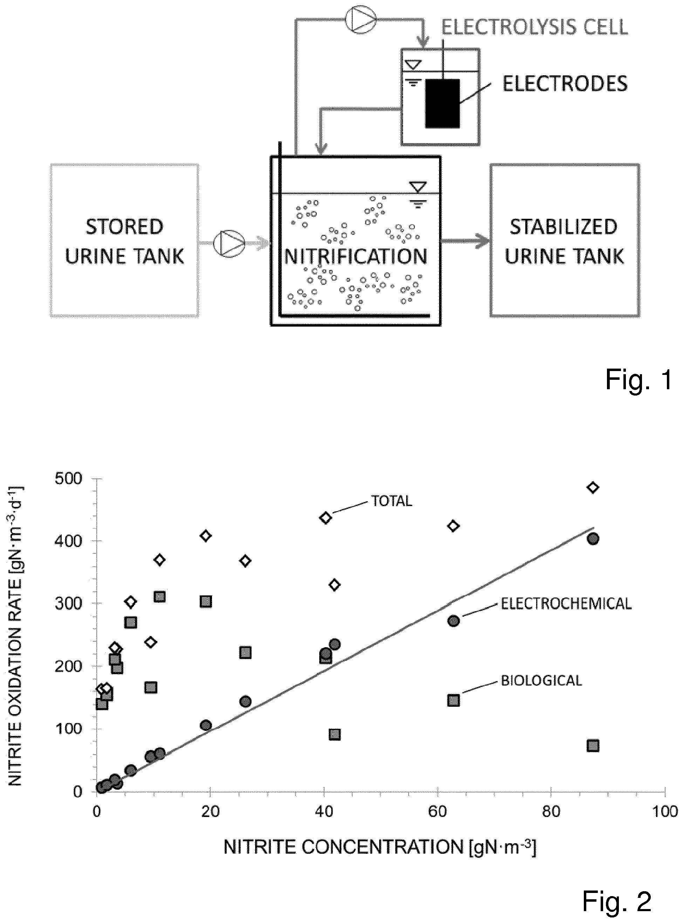

The apparatus shown in Fig. 1 comprises a potentiostatically operated electrolysis cell coupled to a biological urine nitrification reactor. The nitrification is carried out in a continuous flow stirred tank reactor (CSTR). The content of the reactor is simultaneously recirculated through an electrolysis cell by means of a pump. The electrolysis cell consists of a parallel plate flow cell equipped with a graphite anode and a graphite cathode. However, the electrochemical cell should also work with other types of electrodes, i.e. with other electrode materials and shapes. A reference electrode is used to control the anode potential. Electrochemical nitrite oxidation sets in automatically as soon as elevated nitrite concentrations are present in the reactor.

### Examples:

In a first series of batch experiments an increasing amount of nitrite was added as a pulse to a running urine nitrification reactor coupled with an electrolysis cell. The nitrite oxidation rates were then evaluated in function of the nitrite concentration. With the aid of a nitrogen mass balance, the share of biological and electrochemical nitrite oxidation could be set out (Fig. 2). Biological nitrite oxidation was the dominant process until a concentration of 40 gN·m⁻³ was reached. At nitrite concentrations higher than 40 gN·m⁻³, the electrochemical nitrite oxidation rate was higher. The biological nitrite oxidation increased until a concentration of 15 gN·m⁻³ was reached. Above this concentration, the NOB activity decreased due to inhibition. The electrochemical nitrite oxidation rate was increasing linearly up to a nitrite concentration of 90 gN·m⁻³ reaching a value of about 400 gN·m⁻³·d⁻¹. The slope of the straight line depends on the ratio of electrode surface to reactor volume and on the applied anode potential. The more electrode surface is provided for a given reactor volume the steeper is the slope.

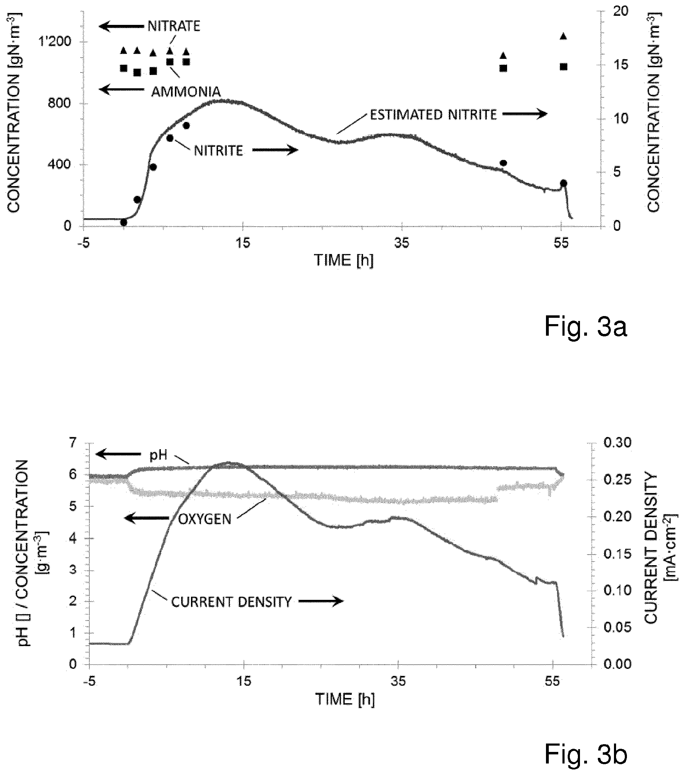

The second series of experiments consisted of influent load increase experiments. The inflow was increased from a base load of stored urine at which biological nitrification was running stably. The influent load was increased from 5% up to 100% of the base load. The increased ammonia load and pH led to increased AOB activity and nitrite accumulation. For influent load increases up to 20% the nitrite accumulation was negligible meaning that NOB activity could keep up with AOB activity. Load increases of more than 20% and up to 40% resulted in the accumulation of nitrite and the electrochemical oxidation of nitrite (Fig. 3). The nitrite concentrations reached values up to 12 gN·m³ and electrochemical nitrite oxidation was estimated to account for about 15% of the nitrite oxidation at maximum. By keeping the nitrite concentrations low, electrochemical nitrite oxidation allowed more NOB to grow into the system and to adapt to the higher influent load.

## Claims

1. A method of biological nitrification of an ammonia containing aqueous medium, wherein in a first oxidation step ammonia is oxidized to nitrite by ammonia oxidizing bacteria (AOB) and wherein in a second oxidation step nitrite is oxidized to nitrate by nitrite oxidizing bacteria (NOB), wherein a supplementary process of nitrite removal is applied which has a nitrite removal rate that is dependent on the instant nitrite concentration in the aqueous medium,
**characterized in that** the supplementary process comprises exposing the aqueous medium to a potentiostatically operated electrolysis cell comprising an anode, a cathode and a reference electrode, wherein the anode potential is maintained at a fixed value against the reference electrode, the fixed potential value being 0.4 V to 2.0 V versus a standard hydrogen electrode reference (SHE).

2. The method according to claim 1, wherein the aqueous medium is urine.

3. The method according to claim 1 or 2, wherein the anode and cathode are configured as graphite electrodes.

4. The method according to one of claims 1 to 3, wherein the anode potential is maintained to a value in the range of 0.9 to 1.5 V, more particularly 1.1 to 1.3 V versus SHE.

5. The method according to one of claims 1 to 4, wherein the electrical current flowing through the anode or the applied voltage is used to quantify the concentration of nitrite present in the electrolysis cell.

6. The method according to one of claims 1 to 5, wherein the pH value of the aqueous medium is maintained in the range of 5.4 to 8.0.

7. The method according to one of claims 1 to 6, further comprising a step of removing micro-pollutants contained in the wastewater.

8. The method according to one of claims 1 to 7, which is carried out as a continuous flow process wherein ammonia containing aqueous medium with an initial ammonia concentration flows into a reaction zone where it is subjected to said first and second oxidation steps and subsequently flows out of the reaction zone having a comparatively lower ammonia concentration.

9. The method according to claims 7 and 8, wherein the pH-value of the aqueous medium is maintained by controlling the inflow rate of the ammonia containing aqueous medium.

10. The method according to one of claims 1 to 9, followed by a step of water removal.

11. The method according to claim 10, wherein the step of water removal is effected by evaporation.

## Patentansprüche

1. Verfahren zur biologischen Nitrifikation eines Ammoniak enthaltenden wässrigen Mediums, wobei in einem ersten Oxidationsschritt Ammoniak durch Ammoniak oxidierende Bakterien (AOB) zu Nitrit oxidiert wird und wobei in einem zweiten Oxidationsschritt Nitrit durch Nitrit oxidierende Bakterien (NOB) zu Nitrat oxidiert wird, wobei ein zusätzlicher Prozess der Nitritentfernung angewendet wird, der eine Nitritentfernungsrate aufweist, die von der momentanen Nitritkonzentration im wässrigen Medium abhängig ist, **dadurch gekennzeichnet, dass** beim zusätzlichen Prozess das wässrige Medium einer potentiostatisch betriebenen Elektrolysezelle ausgesetzt wird, welche eine Anode, eine Kathode und eine Referenzelektrode umfasst, wobei das Anodenpotential auf einem festen Wert gegenüber der Referenzelektrode gehalten wird, wobei der feste Potentialwert 0,4 V bis 2,0 V gegenüber einer Standard-Wasserstoffelektroden-Referenz (SHE) beträgt.

2. Verfahren nach Anspruch 1, wobei das wässrige Medium Urin ist.

3. Verfahren nach Anspruch 1 oder 2, wobei die Anode und die Kathode als Graphitelektroden ausgebildet sind.

4. Verfahren nach einem der Ansprüche 1 bis 3, wobei das Anodenpotential auf einem Wert im Bereich von 0.9 bis 1.5 V, insbesondere 1.1 bis 1.3 V, gegenüber SHE gehalten wird.

5. Verfahren nach einem der Ansprüche 1 bis 4, wobei der durch die Anode fliessende elektrische Strom oder die angelegte Spannung zur Quantifizierung der Konzentration des in der Elektrolysezelle vorhandenen Nitrits verwendet wird.

6. Verfahren nach einem der Ansprüche 1 bis 5, wobei der pH-Wert des wässrigen Mediums im Bereich von 5,4 bis 8,0 gehalten wird.

7. Verfahren nach einem der Ansprüche 1 bis 6, weiterhin umfassend einen Schritt zur Entfernung von im Abwasser enthaltenen Mikroverunreinigungen.

8. Verfahren nach einem der Ansprüche 1 bis 7, welches als kontinuierlicher Durchflussprozess ausgeführt wird, bei dem ammoniakhaltiges wässriges Medium mit einer anfänglichen Ammoniakkonzentration in eine Reaktionszone fliesst, wo es dem besagten ersten und zweiten Oxidationsschritt unterzogen wird, und anschliessend mit einer vergleichsweise niedrigeren Ammoniakkonzentration aus der Reaktionszone fliesst.

9. Verfahren nach den Ansprüchen 7 und 8, wobei der pH-Wert des wässrigen Mediums durch Steuerung der Zuflussrate des Ammoniak enthaltenden wässrigen Mediums aufrechterhalten wird.

10. Verfahren nach einem der Ansprüche 1 bis 9, gefolgt von einem Schritt der Wasserentfernung.

11. Verfahren nach Anspruch 10, wobei der Schritt der Wasserentfernung durch Verdampfen erfolgt.

## Revendications

1. Procédé de nitrification biologique d'un milieu aqueux contenant de l'ammoniac, dans lequel dans une première étape d'oxydation l'ammoniac est oxydé en nitrite par des bactéries oxydant l'ammoniac (AOB), et dans une deuxième étape d'oxydation le nitrite est oxydé en nitrate par des bactéries oxydant le nitrite (NOB), dans lequel un processus supplémentaire d'élimination du nitrite est appliqué qui a un taux d'élimination des nitrites qui dépend de la concentration instantanée en nitrite dans le milieu aqueux, **caractérisé en ce que** le processus supplémentaire comprend l'exposition du milieu aqueux à une cellule d'électrolyse actionnée de manière potentiostatique comprenant une anode, une cathode et une électrode de référence, dans lequel le potentiel d'anode est maintenu à une valeur fixe par rapport à l'électrode de référence, la valeur de potentiel fixe étant comprise entre 0,9 et 1,5 V par rapport à une référence d'électrode à hydrogène standard (SHE).

2. Procédé selon la revendication 1, dans lequel le milieu aqueux est l'urine.

3. Procédé selon la revendication 1 ou 2, dans lequel l'anode et la cathode sont configurées sous forme d'électrodes en graphite.

4. Procédé selon l'une des revendications 1 à 3, dans lequel le potentiel anodique est maintenu à une valeur comprise entre 0.9 à 1.5 V, particulièrement entre 1.1 à 1.3 V par rapport à SHE.

5. Procédé selon l'une des revendications 1 à 4, dans lequel le courant électrique circulant à travers l'anode ou la tension appliquée est utilisé pour quantifier la concentration de nitrite présent dans la cellule d'électrolyse.

6. Procédé selon l'une des revendications 1 à 5, dans lequel la valeur du pH du milieu aqueux est maintenue dans la plage de 5.4 à 8.0.

7. Procédé selon l'une des revendications 1 à 6, comprenant en outre une étape d'élimination des micropolluants contenus dans les eaux usées.

8. Procédé selon l'une des revendications 1 à 7, qui est mis en oeuvre comme un processus à flux continu dans lequel un milieu aqueux contenant de l'ammoniac avec une concentration initiale en ammoniac s'écoule dans une zone de réaction où il est soumis auxdites première et seconde étapes d'oxydation et s'écoule ensuite de la zone réactionnelle ayant une concentration en ammoniac comparativement plus faible.

9. Procédé selon les revendications 7 et 8, dans lequel la valeur du pH du milieu aqueux est maintenue en contrôlant le débit du milieu aqueux contenant de l'ammoniac influent.

10. Procédé selon l'une des revendications 1 à 9, suivi d'une étape d'élimination de l'eau.

11. Procédé selon la revendication 10, dans lequel l'étape d'élimination de l'eau est effectuée par évaporation.
